# EUROPÄISCHE PATENTANMELDUNG

(11) **EP 1 868 399 A1**
(43) Veröffentlichungstag der Anmeldung: **19.12.2007**
(21) Anmeldenummer: 06012296.7
(22) Anmeldetag: 14.06.2006
(51) Int. Cl.: H04Q 7/36

(54) **Reservierung von Funkressourcen für einen Signalisierungsaustausch zwischen Basisstationen**

(71) Anmelder: SIEMENS AKTIENGESELLSCHAFT, 80333 München (DE)
(72) Erfinder: Halfmann, Rüdiger, 67697 Otterberg (DE); Luo, Jijun, 80797 München (DE); Waldhauser, Richard, 81249 München (DE)

(57) **Zusammenfassung**

Die Erfindung betrifft ein Verfahren zum Betreiben eines Funkkommunikationssystems, in welchem zur Kommunikation zwischen netzseitigen Funkstationen (BSWA, BSLA) und Teilnehmerstationen ein Frequenzbereich verwendet wird. Eine erste netzseitige Funkstation (BSWA) führt eine direkte Abstimmung (SIGNAL) mit einer zweiten netzseitigen Funkstation (BSLA) über jeweils zur Kommunikation mit Teilnehmerstationen verwendete Funkressourcen durch, wobei die Abstimmung (SIGNAL) unter Verwendung von ersten Funkressourcen des Frequenzbereiches erfolgt. Vor der Abstimmung (SIGNAL) findet eine Signalisierungs-Kommunikation (TRIGGER, ACK1, RES) zwischen der ersten netzseitigen Funkstation (BSWA) und der zweiten netzseitigen Funkstation (BSLA) statt zur Bestimmung der für die Abstimmung (SIGNAL) zu verwendenden ersten Funkressourcen. Weiterhin betrifft die Erfindung eine netzseitige Funkstation (BSWA) zur Durchführung des Verfahrens.

## Beschreibung

Die Erfindung betrifft ein Verfahren zum Betreiben eines Funkkommunikationssystems, in welchem zur Kommunikation zwischen netzseitigen Funkstationen und Teilnehmerstationen ein Frequenzbereich verwendet wird.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich.

Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Um eine möglichst effiziente Übertragung von Daten zu erreichen, kann man das gesamte zur Verfügung stehende Frequenzband in mehrere Subbänder (Multicarrier- bzw. Mehrträgerverfahren) zerlegen. Die den Mehrträgersystemen zugrunde liegende Idee ist es, das Ausgangsproblem der Übertragung eines breitbandigen Signals in die Übertragung mehrerer schmalbandiger Signale zu überführen. Ein Beispiel für ein Mehrträgerübertragungsverfahren ist OFDM (Orthogonal Frequency Division Multiplexing), bei welchem für die Subbänder zeitlich annähernd rechteckige Pulsformen verwendet werden.

Der Erfindung liegt die Aufgabe zugrunde, ein effizientes Verfahren zum Betreiben eines Funkkommunikationssystems aufzuzeigen, in welchem zur Kommunikation zwischen netzseitigen Funkstationen und Teilnehmerstationen ein Frequenzbereich verwendet wird. Weiterhin soll eine netzseitige Funkstation zur Durchführung des Verfahrens vorgestellt werden.

Diese Aufgabe wird durch ein Verfahren mit den Merkmalen des Anspruchs 1 und durch eine Vorrichtung mit Merkmalen eines nebengeordneten Anspruchs gelöst. Vorteilhafte Ausgestaltungen und Weiterbildungen sind Gegenstand von Unteransprüchen.

Das erfindungsgemäße Verfahren betrifft ein Funkkommunikationssystem, in welchem zur Kommunikation zwischen netzseitigen Funkstationen und Teilnehmerstationen ein Frequenzbereich verwendet wird. Eine erste netzseitige Funkstation führt eine direkte Abstimmung mit einer zweiten netzseitigen Funkstation über jeweils zur Kommunikation mit Teilnehmerstationen verwendete Funkressourcen durch. Hierbei erfolgt die Abstimmung unter Verwendung von ersten Funkressourcen des Frequenzbereiches. Vor der Abstimmung findet eine Signalisierungs-Kommunikation zwischen der ersten netzseitigen Funkstation und der zweiten netzseitigen Funkstation statt zur Bestimmung der für die Abstimmung zu verwendenden ersten Funkressourcen.

Es werden zwei netzseitige Funkstationen betrachtet. Bei diesen netzseitigen Funkstationen handelt es sich vorzugsweise um netzseitigen Funkstationen mit aneinander angrenzenden oder überlappenden Funkabdeckungsbereichen. Für diese ist aufgrund der Interzellinterferenz eine Abstimmung über verwendete Funkressourcen sinnvoll. Die beiden netzseitigen Funkstationen kommunizieren innerhalb ihres Funkabdeckungsbereiches jeweils mit Teilnehmerstationen. Diese Kommunikation kann jeweils die Nachrichtenversendung und/oder den Nachrichtenempfang durch die jeweilige netzseitige Funkstation umfassen. In dem Funkkommunikationssystem steht für die Kommunikation mit Teilnehmerstationen ein Frequenzbereich zur Verfügung. Die erste und die zweite netzseitige Funkstation können für ihre Kommunikation mit Teilnehmerstationen jeweils einen Teil des Frequenzbereiches oder den gesamten Frequenzbereich nutzen.

Die netzseitigen Funkstationen verwenden jeweils Funkressourcen für ihre Kommunikation mit Teilnehmerstationen. Diese Funkressourcen stehen der jeweiligen netzseitigen Funkstation hierfür zur Verfügung. Hierbei müssen die von einer netzseitigen Funkstation verwendeten bzw. ihr zur Verfügung stehenden Funkressourcen nicht ununterbrochen von dieser benutzt werden, eine netzseitige Funkstation hat jedoch während der Zeit, in welcher ihr die Funkressourcen zur Verfügung stehen, die Möglichkeit, diese zu nutzen, indem sie sie beispielsweise an Teilnehmerstationen zuweist. Bei den Funkressourcen kann es sich insbesondere um eine Kombination einer oder mehrerer der Größen Frequenz, Zeit, Kode und Raum handeln.

Die beiden netzseitigen Funkstationen stimmen sich über die von ihnen verwendeten Funkressourcen ab. Bei der direkten Abstimmung über die verwendeten Funkressourcen können die netzseitigen Funkstationen ohne Einbeziehung einer zentralen entscheidenden Instanz Informationen betreffend von ihnen verwendete Funkressourcen austauschen; gegebenenfalls können die netzseitigen Funkstationen hierbei Funkressourcen zwischen sich aufteilen. Im Rahmen einer solchen Abstimmung kann z.B. eine netzseitige Funkstation der anderen mitteilen, welche Funkressourcen sie aktuell verwendet oder zukünftig verwenden wird. Weiterhin kann z.B. eine netzseitige Funkstationen bei der anderen netzseitigen Funkstationen anfragen, ob sie Funkressourcen verwenden darf, welche aktuell die andere netzseitige Funkstationen verwendet. Die Abstimmung kann in einer Neuzuordnung von Funkressourcen zu den netzseitigen Funkstationen resultieren.

Die Abstimmung erfolgt unter Verwendung von Funkressourcen des Frequenzbereiches. Dies bedeutet, dass für die Abstimmung Funkressourcen verwendet werden, welche grundsätzlich auch für die Kommunikation zwischen einer netzseitigen Funkstation und einer Teilnehmerstation einsetzbar sind. Vor der Abstimmung wird durch eine Signalisierungs-Kommunikation zwischen den netzseitigen Funkstationen bestimmt, welche Funkressourcen für die Abstimmung verwendet werden sollen. Es existieren somit keine Funkressourcen des Frequenzbereiches, welche eigens dazu vorgesehen sind, für die Abstimmung eingesetzt zu werden. Vielmehr ist hierzu eine Einigung zwischen den netzseitigen Funkstationen erforderlich. Diese Einigung wird durch die Signalisierungs-Kommunikation erzielt. Die Signalisierungs-Kommunikation kann hierbei aus der Versendung einer oder mehrerer Nachrichten durch die erste netzseitige Funkstation bestehen, oder aus der Versendung einer oder mehrerer Nachrichten durch die zweite netzseitige Funkstation, oder aus einem Austausch von Nachrichten zwischen den netzseitigen Funkstationen.

In Weiterbildung der Erfindung erfolgt die Signalisierungs-Kommunikation über eine Leitung zwischen der ersten netzseitigen Funkstation und der zweiten netzseitigen Funkstation, und/oder unter Verwendung von zweiten Funkressourcen des Frequenzbereiches, welche sich von den ersten Funkressourcen unterscheiden, und/oder unter Verwendung der ersten Funkressourcen, und/oder unter Verwendung von Funkressourcen eines anderen Frequenzbereiches. Hierbei können für verschiedene Bestandteile der Signalisierungs-Kommunikation verschiedene Schnittstellen zwischen der ersten und der zweiten netzseitigen Funkstation und somit verschiedene Übertragungsressourcen eingesetzt werden.

Einer Ausgestaltung der Erfindung gemäß sendet die erste netzseitige Funkstation der zweiten netzseitigen Funkstation im Rahmen der Signalisierungs-Kommunikation eine Anzeige-Nachricht zur Anzeige eines Abstimmungsbedarfs der ersten netzseitigen Funkstation. Diese Anzeige-Nachricht kann die weiteren Schritte der Signalisierungs-Kommunikation auslösen. Der Abstimmungsbedarf kann z.B. durch einen vermehrten Funkressourcenbedarf der ersten netzseitigen Funkstation verursacht werden. Stellt die erste netzseitige Funkstation beispielsweise fest, dass die Teilnehmerstationen, mit welchen sie kommuniziert oder kommunizieren wird, mehr Funkressourcen benötigen als der ersten netzseitigen Funkstation aktuell zur Verfügung stehen, so kann die erste netzseitige Funkstation die zweite netzseitige Funkstation kontaktieren, um zu erreichen, dass der ersten netzseitigen Funkstation ein größerer Umfang an Funkressourcen zur Verfügung steht. Für die Versendung der Anzeige-Nachricht können periodisch wiederkehrende Funkressourcen des Frequenzbereiches, z.B. ausreichend für die Versendung von genau einem Bit, vorgesehen sein. Wenn Funkressourcen für die Versendung der Anzeige-Nachricht vorgesehen sind, so sind diese für diesen Zweck reserviert und werden von der ersten netzseitigen Funkstation nicht für andere Nachrichten verwendet.

Mit Vorzug wird im Rahmen der Signalisierungs-Kommunikation vor der Bestimmung der für die Abstimmung zu verwendenden ersten Funkressourcen entschieden, Funkressourcen des Frequenzbereiches für die Abstimmung zu verwenden. Diese Entscheidung erfolgt z.B. durch einen Vergleich mit anderen Übertragungsressourcen, wie Übertragungsressourcen einer Funkübertragung in einem anderen Frequenzbereich oder über Leitung. So kann beispielsweise entschieden werden, Funkressourcen des Frequenzbereiches nur dann für die Abstimmung zu verwenden, wenn andere Überragungsmöglichkeiten bestimmen Qualitätsanforderungen nicht genügen.

Einer bevorzugten Weiterbildung der Erfindung gemäß entscheidet die erste netzseitige Funkstation über die für die Abstimmung zu verwendenden ersten Funkressourcen und teilt der zweiten netzseitigen Funkstation im Rahmen der Signalisierungs-Kommunikation die ersten Funkressourcen mit. In diesem Fall ist es möglich, dass die Signalisierungs-Kommunikation einzig aus der Mitteilung der ersten Funkressourcen durch die erste netzseitige Funkstation an die zweite netzseitige Funkstation besteht. Für die Mitteilung der ersten netzseitigen Funkstation können periodisch wiederkehrend Funkressourcen des Frequenzbereiches vorgesehen sein. Wenn Funkressourcen für die Versendung der Mitteilung vorgesehen sind, sind sie für diese Zwecke reserviert und werden von der ersten netzseitigen Funkstation nicht für andere Nachrichten verwendet.

Besonders vorteilhaft ist es, wenn die erste netzseitige Funkstation von einer netzseitigen Einrichtung eine Nachricht empfängt, wobei die Nachricht der ersten netzseitigen Funkstation eine Entscheidungsbefugnis verleiht zur Entscheidung über für die Abstimmung zu verwendende Funkressourcen. Diese Nachricht kann auch der zweiten netzseitigen Funkstation gesendet werden, so dass beiden netzseitigen Funkstationen bekannt ist, dass die erste netzseitige Funkstation die ersten Funkressourcen auswählen wird. Bei der Einrichtung kann es sich z.B. um eine Einrichtung des O&M Systems (O&M: Operation und Maintenance) handeln.

Es ist möglich, das die erste netzseitige Funkstation der zweiten netzseitigen Funkstation gegenüber und zumindest einer weiteren netzseitigen Funkstation gegenüber eine Entscheidungsbefugnis zur Entscheidung über für eine Abstimmung zu verwendende Funkressourcen hat. Die Entscheidungsbefugnis gegenüber der weiteren netzseitigen Funkstation kann aus der Entscheidungsbefugnis gegenüber der zweiten netzseitigen Funkstation folgen; hierzu kann ein Vererbungsmechanismus eingesetzt werden.

In Ausgestaltung der Erfindung werden die ersten Funkressourcen vor der Abstimmung von der ersten netzseitigen Funkstation zur Kommunikation mit Teilnehmerstationen verwendet. Dies ist besonders vorteilhaft in Kombination mit einem Vorgehen, bei welchem die erste netzseitige Funkstation die ersten Funkressourcen auswählt. In diesem Fall erfolgt die Auswahl durch die erste netzseitige Funkstation aus ihr aktuell zur Verfügung stehenden Funkressourcen.

Vorteilhaft ist es, wenn die ersten Funkressourcen Bestandteil eines Zeitrahmens der ersten netzseitigen Funkstation und/oder der zweiten netzseitigen Funkstation sind. Hierzu eignen sich insbesondere die MAC-Rahmen. Die MAC (Medium Access Control) Schicht ist eine Teilschicht der aus dem OSI (Open Systems Interconnection) Referenzmodell der ISO (International Standardization Organization) bekannten Sicherungsschicht (data link layer) und ist in diesem Schichtmodell über der physikalischen Schicht angeordnet. Die Abstimmung kann durch eine in der MAC Schicht, d.h. in einem als MAC-Rahmen bezeichneten Funkübertragungsrahmen, schneller erfolgen, als wenn sie höheren Schichten (z.B. der Vermittlungs- oder der Transport- oder sogar der Anwendungsschicht) zugeordnet wird.

In Ausgestaltung der Erfindung sind die ersten Funkressourcen nach der Signalisierungs-Kommunikation für die Abstimmung reserviert. Dies bedeutet, dass die ersten Funkressourcen weder von der ersten netzseitigen Funkstation noch von der zweiten netzseitigen Funkstation für andere Kommunikationen, insbesondere nicht für Kommunikationen mit Teilnehmerstationen, eingesetzt werden. Sie werden vielmehr von den netzseitigen Funkstationen für die Abstimmung freigehalten. Nach erfolgter Abstimmung können die ersten Funkressourcen freigegeben werden. Vorzugsweise sendet die erste netzseitige Funkstation der zweiten netzseitigen Funkstation vor der Freigabe eine Nachricht zur Anzeige der Freigabe. Aufgrund der Freigabe können die ersten Funkressourcen von der ersten netzseitigen Funkstation und/oder von der zweiten netzseitigen Funkstation für andere Kommunikationen, insbesondere für Kommunikationen mit Teilnehmerstationen, eingesetzt werden.

Die erfindungsgemäße netzseitige Funkstation eignet sich für ein Funkkommunikationssystem, in welchem zur Kommunikation zwischen netzseitigen Funkstationen und Teilnehmerstationen ein Frequenzbereich verwendet wird. Sie umfasst Mittel zum Durchführen einer direkten Abstimmung mit einer weiteren netzseitigen Funkstation über jeweils zur Kommunikation mit Teilnehmerstationen verwendete Funkressourcen, wobei diese Abstimmung unter Verwendung von ersten Funkressourcen des Frequenzbereichs erfolgt. Weiterhin umfasst die erfindungsgemäße netzseitige Funkstation Mittel zum Teilnehmen an einer Signalisierungs-Kommunikation mit der weiteren netzseitigen Funkstation zur Bestimmung der für die Abstimmung zu verwendenden ersten Funkressourcen, wobei die Signalisierungs-Kommunikation vor der Abstimmung erfolgt.

Die erfindungsgemäße netzseitige Funkstation eignet sich insbesondere zur Durchführung des erfindungsgemäßen. Verfahrens, wobei dies auch auf die Ausgestaltungen und Weiterbildungen zutreffen kann. Hierzu kann sie weitere geeignete Mittel umfassen.

Im folgenden wird die Erfindung anhand eines Ausführungsbeispiels näher erläutert. Dabei zeigen:
- Figur 1A:: einen ersten Ausschnitt aus einem Funkkommunikationssystem,
- Figur 1B:: einen zweiten Ausschnitt aus einem Funkkommunikationssystem,
- Figur 2:: einen Verfahrensablauf-Diagramm,
- Figur 3:: eine Reihe von Zeitrahmen,
- Figur 4:: einen einzelnen Zeitrahmen.

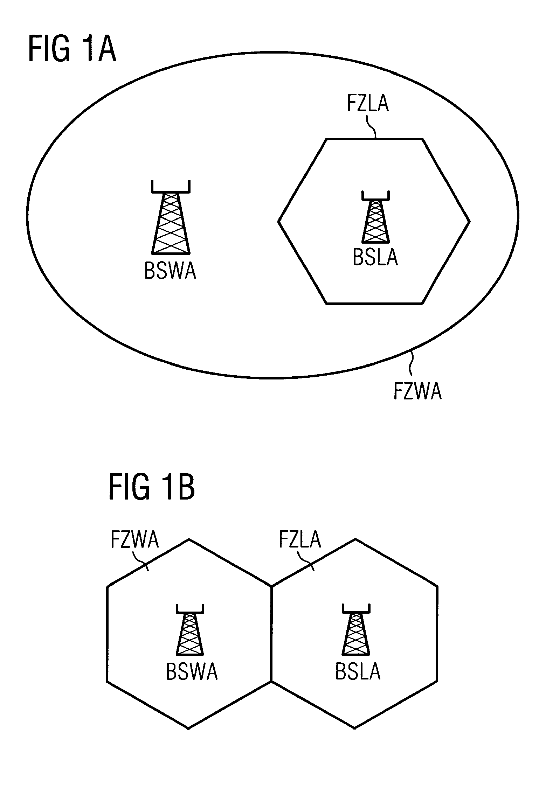

Der in Figur 1A dargestellte Ausschnitt aus einem Funkkommunikationssystem zeigt die Funkzelle FZWA (WA: Wide Area), welche von der netzseitigen Funkstation BSWA versorgt wird, sowie die Funkzelle FZLA (LA: Local Area), welche von der netzseitigen Funkstation BSLA versorgt wird. In den Funkzellen Funkzelle FZWA bzw. FZLA kommunizieren die netzseitigen Funkstationen BSWA bzw. BSLA mit nicht dargestellten Teilnehmerstationen. Die Funkzelle FZWA stellt in Bezug auf die Funkzelle FZLA eine so genannte "umbrella cell" dar, denn räumlich ist die Funkzelle FZLA ist in der Funkzelle FZWA enthalten. Gegebenfalls vorhandene weitere netzseitige Einrichtungen sind aus Gründen der Übersichtlichkeit nicht in Figur 1A dargestellt.

Die Erfindung ist nicht auf die in Figur 1A dargestellte Konstellation beschränkt. Bei den beiden netzseitigen Funkstationen BSWA und BSLA könnte es sich z.B. auch um netzseitige Funkstationen mit aneinander angrenzenden Funkzellen, insbesondere mit ähnlich großen Funkzellen, handeln, wie in Figur 1B dargestellt. Bei dieser Konstellation der Figur 1B wie auch bei der Konstellation der Figur 1A können in einer der Funkzellen ausgestrahlte Signale mit in der anderen Funkzelle ausgestrahlten Signalen auf unerwünschte Weise interferieren.

Die netzseitigen Funkstationen BSWA und BSLA verwenden zur Kommunikation mit Teilnehmerstationen Funkressourcen aus einer Menge von dem gesamten System zustehenden Funkressourcen. Hiervon kann sowohl die netzseitige Funkstationen BSWA als auch die netzseitige Funkstationen BSLA über bestimmte Funkressourcen verfügen. Es existiert keine zentrale Einrichtung, z.B. bei UMTS als RNC (Radio Network Controller) bezeichnet, welche für die Vergabe von Funkressourcen an die netzseitigen Funkstationen BSWA und BSLA zuständig ist. Eine derartige flache Architektur eignet sich insbesondere für zukünftige Funkkommunikationssysteme, z.B. nach den Anforderungen beschrieben in 3GPP TR 25.913, TS RAN, Requirements for Evolved UTRA (E-UTRA) and Evolved UTRAN (E-UTRAN), Juni 2005.
Daher soll eine direkte Abstimmung zwischen den beiden netzseitigen Funkstationen BSWA und BSLA über die jeweils verwendeten Funkressourcen stattfinden. Ziel dieses im folgenden mit Abstimmungs-Signalisierung bezeichneten Austausches zwischen den beiden netzseitigen Funkstationen BSWA und BSLA ist es, festzulegen, über welche Funkressourcen die beiden netzseitigen Funkstationen BSWA und BSLA jeweils verfügen dürfen.

Die Art der verfügbaren Funkressourcen hängt hierbei von der konkreten Ausgestaltung des Funkkommunikationssystems ab. Es kann sich bei einer Funkressourceneinheit um eine Kombination der Größen Zeit, Frequenz, Kode und Raum handeln. Insbesondere die Verwendung von als chunks bezeichneten Funkressourceneinheiten, welche aus einer Kombination von einem oder mehreren benachbarten Subbändern eines Frequenzbandes mit einem Zeitabschnitt bestehen, bietet sich an.

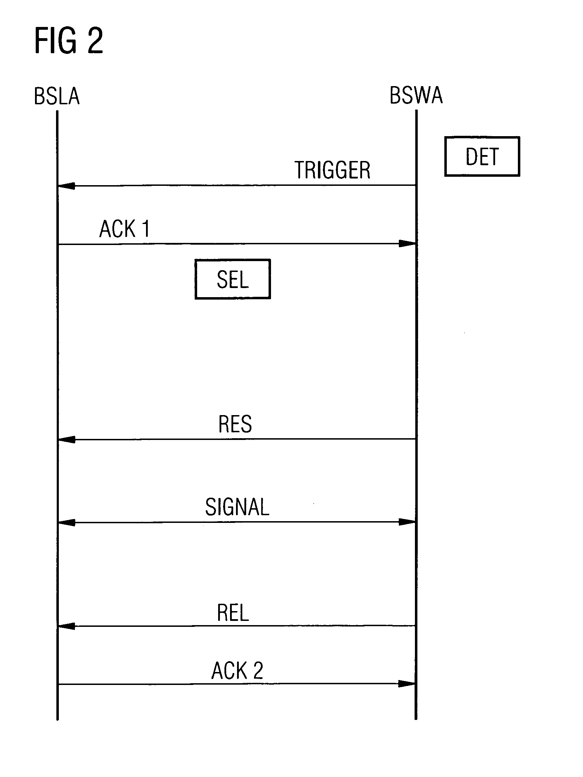

Figur 2 zeigt ein Diagramm zum im folgenden beschriebenen Verfahrensablauf. Zu Beginn stellt die netzseitige Funkstation BSWA im Schritt DET fest, dass ein Signalisierungsaustausch zur Funkressourcen-Abstimmung zwischen den netzseitigen Funkstationen BSWA und BSLA nötig ist. Diese Feststellung ist dadurch bedingt, dass in der Funkzelle BSWA Probleme bei der Funkkommunikation auftreten, wie z.B.
- eine hohe Rufverlustwahrscheinlichkeit (englisch: call blocking/call dropping probability)
- viele Handover-Vorgänge, wobei diese Handover-Vorgänge einen großen Teil der der netzseitigen Funkstation BSWA zur Verfügung stehenden Funkressourcen verbrauchen,
- Schwierigkeiten bei Handover-Vorgängen zwischen den Funkzellen FZWA und FZLA, z.B. schlechte Verbindungsqualität oder lange Handover-Dauern,
- gesteigerter Funkressourcenbedarf in der Funkzelle FZWA, z.B. weil Teilnehmerstationen beginnen, ressourcenaufwendige Dienste anzufordern, oder weil Teilnehmerstationen, welche aktuell ressourcenaufwendige Dienste in einer anderen Funkzelle in Anspruche nehmen, in die Funkzelle FZWA wechseln.

In diesen Fällen benötigt die netzseitige Funkstation BSWA mehr Funkressourcen als ihr aktuell zur Verfügung stehen, oder andere Funkressourcen, für welche eine günstigere Interferenzsituation vorliegt. Da ein Überlapp der Funkzellen FZWA und FZLA vorhanden ist und somit Interzell-Interferenzen zwischen den Funkzellen FZWA und FZLA auftreten, ist für eine Veränderung der der netzseitigen Funkstation BSWA zur Verfügung stehenden Funkressourcen eine Abstimmung mit der netzseitigen Funkstation BSLA erforderlich. Ergebnis dieser Abstimmung kann sein, dass die Funkressourcen umverteilt werden, z.B. indem die netzseitige Funkstation BSWA Funkressourcen verwenden darf, welche zuvor von der netzseitigen Funkstation BSLA verwendet wurden, oder indem die netzseitige Funkstation BSLA die Verwendung bestimmter Funkressourcen, welche von beiden netzseitigen Funkstation BSWA und BSLA verwendet wurden, beendet.

Zur Anzeige, dass eine diesbezügliche Abstimmungs-Signalisierung erfolgen soll, sendet die netzseitige Funkstation BSWA eine Nachricht TRIGGER an die netzseitige Funkstation BSLA. Die Nachricht TRIGGER kann über verschiedene Schnittstellen zwischen den netzseitigen Funkstationen BSWA und BSLA übertragen werden. Z.B. kann die Nachricht TRIGGER über eine über eine Leitung verlaufende Verbindung zwischen den netzseitigen Funkstationen BSWA und BSLA übertragen werden, welche z.B. vorzugsweise IP-Verbindung ausgestaltet ist. Alternativ kann die Nachricht TRIGGER über eine Funkschnittstelle zwischen den netzseitigen Funkstationen BSWA und BSLA übertragen werden, wobei hierfür die Möglichkeit der in-band und der out-band Übertragung existiert. Für eine out-band Übertragung werden Funkfrequenzen verwendet, welche außerhalb des für die Kommunikation mit Teilnehmerstationen eingesetzten Frequenzbereiches liegt. Wenn beispielsweise für die Kommunikation mit Teilnehmerstationen der Frequenzbereich um 2.5 GHz eingesetzt wird, so könnten für eine out-band Übertragung Frequenzen im Bereich von 450 MHz verwendet werden.

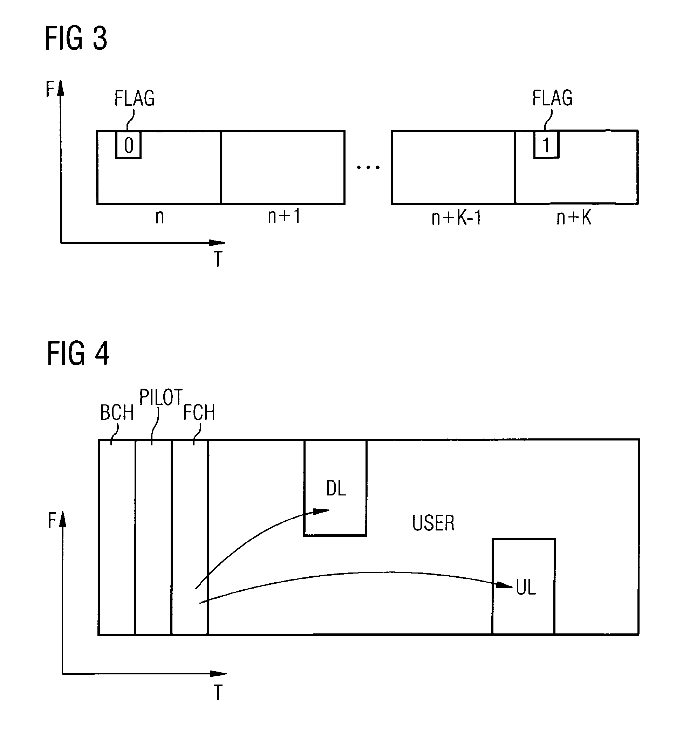

Für die in-band Übertragung der Nachricht TRIGGER eignet es sich besonders, die Nachricht TRIGGER innerhalb der von der netzseitigen Funkstation BSWA verwendeten Zeitrahmen vorzusehen. Figur 3 zeigt eine Reihe von Zeitrahmen der netzseitigen Funkstation BSWA mit den Nummern n, n+1,..., n+K-1, n+K. Hierbei ist die Zeit T nach rechts und die Frequenz F nach oben aufgetragen. Diese Zeitrahmen verwendet die netzseitige Funkstation BSWA zur Kommunikation mit Teilnehmerstationen. Hierbei stehen nicht notwendigerweise alle in diesen Zeitrahmen enthaltenen Funkressourcen der netzseitigen Funkstation BSWA zur Verfügung.

Für die Nachricht TRIGGER ist periodisch in jedem K-ten Zeitrahmen ein Bit FLAG vorgesehen, welches von der netzseitigen Funkstation BSWA auf den Wert 0 oder 1 gesetzt werden kann. Ein Wert von 0 des Bits FLAG bedeutet, dass keine Nachricht TRIGGER gesendet wird, ein Wert von 1 des Bits FLAG entspricht der Nachricht TRIGGER. Für das Bit FLAG sind somit bestimmte Funkressourcen reserviert, welche den beiden netzseitigen Funkstationen BSWA und BSLA und bekannt sind. Der netzseitigen Funkstation BSLA ist daher bekannt, dass sich das Bit FLAG in jedem K-ten Zeitrahmen der netzseitigen Funkstation BSWA befindet, so dass die netzseitigen Funkstation BSLA die für das Bit FLAG reservierten Funkressourcen beobachtet, um festzustellen, ob eine Nachricht TRIGGER gesendet wird. Im vorliegenden Beispiel der Figur 3 stellt die netzseitige Funkstation BSLA im Zeitrahmen n+K fest, dass die Nachricht TRIGGER gesendet wird.

Auf die Nachricht TRIGGER der netzseitigen Funkstation BSWA antwortet die netzseitige Funkstation BSLA mit einer Nachricht ACK1. Die Übertragung der Nachricht ACK1 kann über eine der oben in Bezug auf die Nachricht TRIGGER beschriebenen Schnittstellen erfolgen, d.h. über Leitung, per Funk out-band oder per Funk in-band. Es bietet sich die Verwendung der gleichen Schnittstelle für die beiden Nachrichten TRIGGER und ACK1 an. Im Falle einer in-band Übertragung werden vorzugsweise periodisch Funkressourcen der von der netzseitigen Funkstation BSLA verwendeten Zeitrahmen für die Versendung der Nachricht ACK1 reserviert. Bei der in-band Übertragung sind in diesem Fall für die Nachricht ACK1 bestimmte Funkressourcen reserviert, welche den beiden netzseitigen Funkstationen BSWA und BSLA und bekannt sind. Der netzseitigen Funkstation BSWA ist daher bekannt, in welchen Zeitrahmen der netzseitigen Funkstation BSLA sich die Nachricht ACK1 befinden kann, so dass die netzseitigen Funkstation BSWA die für die Nachricht ACK1 reservierten Funkressourcen beobachtet, um festzustellen, ob eine Nachricht ACK1 gesendet wird.

Im folgenden muss entschieden werden, welche Schnittstelle zwischen den netzseitigen Funkstationen BSWA und BSLA für die Abstimmungs-Signalisierung eingesetzt wird, wobei diese Entscheidung über die zu verwendende Schnittstelle in einem Schritt SEL erfolgt. Es kann z.B. vorgesehen sein, dass die Abstimmungs-Signalisierung über eine bestimmte Schnittstelle - welche sich von der Schnittstelle der in-band Übertragung unterscheidet - erfolgen soll, wenn die Übertragung über die bestimmte Schnittstelle bestimmten Qualitätskriterien genügt, z.B. hinsichtlich der Verzögerung und des Datendurchsatzes. Die netzseitigen Funkstationen BSWA und BSLA überprüfen daher die Übertragungsbedingungen über diese bestimmte Schnittstelle. Dies kann erfolgen, indem die netzseitige Funkstation BSLA diese Übertragungsbedingungen ermittelt und Informationen hierüber der Nachricht ACK1 beifügt. Aufgrund eines solchen Schrittes SEL ist die Verwendung der in-band Schnittstelle für die Abstimmungs-Signalisierung bedarfsabhängig; die in-band Schnittstelle wird eingesetzt, wenn die Abstimmungs-Signalisierung über eine andere Schnittstelle nicht erfolgen kann oder deutliche Nachteile hätte. Es kann alternativ hierzu jedoch auch auf den Schritt SEL verzichtet werden, so dass grundsätzlich die Abstimmungs-Signalisierung in-band erfolgt.

Es stehe fest, dass eine Abstimmungs-Signalisierung zwischen den netzseitigen Funkstationen BSWA und BSLA erfolgen soll, sowie, dass für die hierzu erforderliche Übertragung von Signalisierungsinformationen zwischen den netzseitigen Funkstationen BSWA und BSLA die in-band Funkschnittstelle eingesetzt werden soll. Somit können nun die in-band Funkressourcen bestimmt werden, welche für die Abstimmungs-Signalisierung eingesetzt werden sollen. Hierbei handelt es sich um eine wichtige Entscheidung, denn einerseits werden die in-band Funkressourcen von den netzseitigen Funkstationen BSWA und BSLA für die Kommunikation mit Teilnehmerstationen benötigt, so dass durch die in-band Abstimmungs-Signalisierung weniger Funkressourcen für die Kommunikation mit Teilnehmerstationen zur Verfügung stehen; dies kann die von Teilnehmerstationen erfahrene Qualität der Funkkommunikation reduzieren. Andererseits dient die Abstimmungs-Signalisierung dem Ziel, durch eine geeignete Verteilung von Funkressourcen auf die netzseitigen Funkstationen BSWA und BSLA sicherzustellen, dass beide netzseitigen Funkstationen BSWA und BSLA ihren Teilnehmerstationen eine gute Qualität der Funkkommunikation bieten können. Daher sollte eine der aktuellen Situation angepasste Entscheidung über die für die Abstimmungs-Signalisierung verwendeten Funkressourcen möglich sein.

Im folgenden wird davon ausgegangen, dass die netzseitige Funkstation BSWA entscheidet, welche in-band Funkressourcen für die Abstimmungs-Signalisierung zu verwenden sind. Die Frage, welche der beiden netzseitigen Funkstationen BSWA oder BSLA diese Entscheidungsbefugnis hat, kann z.B. anhand einem oder mehreren der folgenden Kriterien festgelegt werden:
- Diejenige netzseitige Funkstation BSWA oder BSLA darf entscheiden, welche aktuell über die Funkressourcen verfügen darf, welche für die Abstimmungs-Signalisierung verwendet werden sollen.
- Diejenige netzseitige Funkstation BSWA oder BSLA, in deren Funkzelle sich die Funkzelle der jeweils anderen netzseitigen Funkstation BSWA oder BSLA befindet, oder deren Funkzelle größer ist, darf entscheiden.
- Die netzseitige Funkstation BSWA oder BSLA mit der besseren Hardware-Ausstattung darf entscheiden.
- Diejenige netzseitige Funkstation BSWA oder BSLA, deren Funkzelle aktuell stärker ausgelastet ist, darf entscheiden.
- Eine erste netzseitige Funkstation, welche in einer bestimmten Beziehung steht zu einer zweiten netzseitigen Funkstation, wobei die zweite netzseitige Funkstation gegenüber einer dritten netzseitigen Funkstation nicht entscheidungsbefugt ist, darf nicht gegenüber der dritten netzseitigen Funkstation entscheiden.

Die Festlegung derjenigen netzseitigen Funkstationen BSWA oder BSLA, die entscheiden darf, welche Funkressourcen für die Abstimmungs-Signalisierung zu verwenden sind, kann durch eine Kontroll- und Steuereinrichtung erfolgen. Diese kann der entscheidurigsbefugten netzseitigen Funkstationen BSWA oder BSLA ein Token verleihen, welches die Entscheidungsbefugnis anzeigt. Durch das Token hat eine netzseitige Funkstation eine Vormachtstellung gegenüber einer anderen netzseitigen Funkstation. Diese Vormachtstellung kann sich auch auf eine Mehrzahl von anderen netzseitigen Funkstationen beziehen.

Figur 4 zeigt einen Zeitrahmen der netzseitigen Funkstation BSWA, welche darüber entscheiden darf, welche Funkressourcen für die Abstimmungs-Signalisierung zu verwenden sind. Nach rechts ist hierbei die Zeit T, nach oben die Frequenz F aufgetragen. Der Beginn des Zeitrahmens wird von der netzseitigen Funkstation BSWA für einen Broadcastkanal BCH verwendet, in welchem die netzseitige Funkstation BSWA Organisationsinformationen an Teilnehmerstationen versendet. Darauf folgt die Versendung einer Pilotsequenz PILOT durch die netzseitige Funkstation BSWA, welche die Teilnehmerstationen zur Kanalschätzung verwenden. Darauf folgt ein Signalisierungskanal FCH (Frame Control Channel), welcher von der netzseitigen Funkstation BSWA u.a. zur Zuweisung von Funkressourcen an Teilnehmerstationen verwendet wird.

Über den Signalisierungskanal FCH wird der netzseitigen Funkstation BSLA von der netzseitigen Funkstation BSWA angezeigt, welche Funkressourcen für die Abstimmungs-Signalisierung verwendet werden sollen, symbolisiert durch die beiden auf die Bereiche DL und UL zeigenden Pfeile. In Figur 2 ist diese Anzeige durch eine Nachricht RES, welche von der netzseitigen Funkstation BSWA an die netzseitige Funkstation BSLA gesendet wird, dargestellt. Bei dem Bereich DL handelt es sich um die Funkressourcen, welche bei der Abstimmungs-Signalisierung von der netzseitigen Funkstation BSWA zur Versendung von Nachrichten an die netzseitige Funkstation BSLA verwendet werden können, bei dem Bereich DL um die Funkressourcen, welche bei der Abstimmungs-Signalisierung von der netzseitigen Funkstation BSLA zur Versendung von Nachrichten an die netzseitige Funkstation BSWA verwendet werden können. Es ist vorteilhaft, wenn die Bereiche DL und UL in jedem Zeitrahmen, oder periodisch in jedem n-ten Zeitrahmen angeordnet sind und die gleiche Lage haben, d.h. wenn die für die Abstimmungs-Signalisierung zur Verfügung stehenden Funkressourcen periodisch wiederkehren. Alternativ hierzu ist es möglich, dass die netzseitige Funkstation BSWA in dem Kanal FCH eines andere Zeitschlitzes eine neue Lage der Bereiche DL und UL mitteilt. Der netzseitigen Funkstation BSLA ist bekannt, dass die netzseitige Funkstation BSWA ihr in dem Kanal FCH mitteilt, welche Funkressourcen für die Abstimmungs-Signalisierung zu verwenden sind. Daher hört die netzseitige Funkstation BSLA ausgelöst durch den Empfang der Nachricht TRIGGER den Kanal FCH der netzseitigen Funkstation BSWA ab.

Der übrige mit USER bezeichnete Bereich des Zeitrahmens der Figur 4 wird für die Kommunikation der netzseitigen Funkstationen BSWA und BSLA mit Teilnehmerstationen verwendet. Die Aufteilung der Funkressourcen des Bereiches USER zwischen den netzseitigen Funkstationen BSWA und BSLA hängt von der zuletzt zwischen den netzseitigen Funkstationen BSWA und BSLA getroffenen Abstimmung ab.

Es wurde der Fall beschrieben, dass die netzseitige Funkstation BSWA entscheidet, welche Funkressourcen für die Abstimmungs-Signalisierung zu verwenden sind, und dies der netzseitigen Funkstation BSLA unter Verwendung bestimmter, beiden netzseitigen Funkstationen BSWA und BSLA bekannter Funkressourcen mitteilt. Es ist auch möglich, dass die Anzeige der für die Abstimmungs-Signalisierung zu verwendenden Funkressourcen durch den Zeiger des Kanals FCH lediglich einen Vorschlag darstellt, welchen die netzseitige Funkstation BSLA annehmen oder ablehnen kann. Für diese Reaktion der netzseitigen Funkstation BSLA sind bestimmte beiden netzseitigen Funkstationen BSWA und BSLA bekannte Funkressourcen vorgegeben, wie z.B. der Kanal FCH eines Zeitrahmens der netzseitigen Funkstation BSLA. Ablehnendenfalls kann die netzseitige Funkstation BSLA andere Funkressourcen für die Abstimmungs-Signalisierung vorschlagen, oder es erfolgt ein erneuter Vorschlag durch die netzseitige Funkstation BSWA. Auf diese Weise kann eine gemeinsame Einigung der beiden netzseitigen Funkstationen BSWA und BSLA über die für die Abstimmungs-Signalisierung zu verwendenden Funkressourcen stattfinden.

Bei der Auswahl der Funkressourcen für die Abstimmungs-Signalisierung kann insbesondere das Kriterium herangezogen werden, welche Funkressourcen aktuell von der netzseitigen Funkstation BSWA und/oder von der netzseitigen Funkstation BSLA auf welche Weise zur Kommunikation mit Teilnehmerstationen genutzt werden. Verwendet beispielsweise die netzseitige Funkstation BSWA ein TDD-Duplex-Verfahren, so sollte der Bereich DL nicht innerhalb der Zeitspanne liegen, welche die netzseitige Funkstation BSWA zum Empfang von Nachrichten von Teilnehmerstationen nutzt.

Es wurde der Fall beschrieben, dass die Mitteilung der für die Abstimmungs-Signalisierung zu verwendenden in-band Funkressourcen bzw. die Einigung auf diese zu verwendenden in-band Funkressourcen in-band erfolgt. Alternativ kann eine solche Mittelung oder Einigung auch über eine andere Schnittstelle, d.h. über Leitung oder über Funk out-band stattfinden.

Nachdem beiden netzseitigen Funkstation BSWA und BSLA bekannt ist, welche Funkressourcen für die Abstimmungs-Signalisierung verwendet werden sollen, erfolgt die Abstimmungs-Signalisierung, in Figur 2 als Nachrichtenaustausch SIGNAL bezeichnet. Diese Abstimmungs-Signalisierung kann zusätzlich zur Einigung über von den netzseitigen Funkstationen BSWA und BSLA zur Kommunikation mit Teilnehmerstationen verwendbare Funkressourcen folgendes betreffen:
- Für Handover zwischen den netzseitigen Funkstationen BSWA und BSLA einzusetzende Parameter.
- Die von den netzseitigen Funkstationen BSWA und BSLA verwendeten Sendeleistungen.
- Entscheidungen über die Durchführung von Handovers zwischen den netzseitigen Funkstationen BSWA und BSLA zum Lastausgleich (englisch: load balancing).
- Übertragung von an Teilnehmerstationen zu sendende Informationen zwischen den netzseitigen Funkstationen BSWA und BSLA.

Nach der Entscheidung darüber, welche Funkressourcen für die Abstimmungs-Signalisierung zu verwenden sind, und während der Durchführung der Abstimmungs-Signalisierung sind diese Funkressourcen für die Abstimmungs-Signalisierung reserviert. Dies bedeutet, dass diese Funkressourcen ausschließlich für eine Kommunikation zwischen den netzseitigen Funkstationen BSWA und BSLA verwendet werden dürfen und somit nicht für die Kommunikation mit Teilnehmerstationen zur Verfügung stehen. Nach Abschluss der Abstimmungs-Signalisierung werden diese Funkressourcen wieder freigegeben, so dass sie zur Kommunikation mit Teilnehmerstationen verwendet werden können. Darüber, dass die Funkressourcen freigegeben werden, kann die netzseitige Funkstation BSWA oder BSLA entscheiden. Hat eine der beiden netzseitigen Funkstationen BSWA oder BSLA darüber entschieden, welche Funkressourcen für die Abstimmungs-Signalisierung zu verwenden sind, ist es vorteilhaft, wenn diese netzseitige Funkstation BSWA oder BSLA auch über die Freigabe der Funkressourcen entscheidet.

In Figur 2 ist der Fall dargestellt, dass die netzseitige Funkstation BSWA der netzseitigen Funkstation BSLA eine Nachricht REL sendet, mit welcher der netzseitigen Funkstation BSLA mitgeteilt wird, dass die zuvor für die Abstimmungs-Signalisierung verwendeten Funkressourcen freigegeben werden. Die netzseitige Funkstation BSLA antwortet auf die Nachricht REL mit einer Bestätigungsnachricht ACK2. Ist die netzseitige Funkstation BSLA mit der Freigabe der Funkressourcen nicht einverstanden, kann anstelle der Bestätigungsnachricht ACK2 eine ablehnende Nachricht von der netzseitigen Funkstation BSLA an die netzseitige Funkstation BSWA gesendet werden. Für die Nachrichten REL und ACK2 können die gleichen Übertragungsressourcen eingesetzt werden wie für die Nachrichten TRIGGER und ACK1. Wird für die Nachricht TRIGGER das in Figur 3 dargestellte Bit FLAG eingesetzt, kann nach erfolgter Reservierung von Funkressourcen für die Abstimmungs-Signalisierung ein Wert von 0 für das Bit FLAG bedeuten, dass die Funkressourcen reserviert bleiben, während ein Wert von 1 der Nachricht REL entspricht und somit eine Freigabe der Funkressourcen bedeutet. Alternativ hierzu können für die Übertragungen der Nachrichten REL und ACK2 auch die für die Abstimmungs-Signalisierung reservierten Funkressourcen benutzt werden.

Alternativ zur Freigabe der für die Abstimmungs-Signalisierung verwendeten Funkressourcen können diese für zukünftige Signalisierungen zwischen den netzseitigen Funkstationen BSWA und BSLA reserviert bleiben. Dies kann auch dann erfolgen, wenn die netzseitigen Funkstationen BSWA und BSLA für eine bestimme Zeit keine Signalisierungsnachrichten untereinander austauschen. Auf diese Weise muss das beschriebene Verfahren zur Auswahl der für die Abstimmungs-Signalisierung zu verwendenden Funkressourcen nicht erneut durchgeführt werden, wenn eine der netzseitigen Funkstationen BSWA oder BSLA einen Abstimmungsbedarf erkennt.

## Patentansprüche

1. Verfahren zum Betreiben eines Funkkommunikationssystems, in welchem zur Kommunikation zwischen netzseitigen Funkstationen (BSWA, BSLA) und Teilnehmerstationen ein Frequenzbereich verwendet wird,
eine erste netzseitige Funkstation (BSWA) eine direkte Abstimmung (SIGNAL) mit einer zweiten netzseitigen Funkstation (BSLA) über jeweils zur Kommunikation mit Teilnehmerstationen verwendete Funkressourcen durchführt, wobei die Abstimmung (SIGNAL) unter Verwendung von ersten Funkressourcen (UL, DL) des Frequenzbereiches erfolgt, vor der Abstimmung (SIGNAL) eine Signalisierungs-Kommunikation (TRIGGER, ACK1, RES) zwischen der ersten netzseitigen Funkstation (BSWA) und der zweiten netzseitigen Funkstation (BSLA) stattfindet zur Bestimmung der für die Abstimmung (SIGNAL) zu verwendenden ersten Funkressourcen (UL, DL).

2. Verfahren nach Anspruch 1, bei dem die Signalisierungs-Kommunikation (TRIGGER, ACK1, RES) erfolgt
über eine Leitung zwischen der ersten netzseitigen Funkstation (BSWA) und der zweiten netzseitigen Funkstation (BSLA), und/oder
unter Verwendung von zweiten Funkressourcen des Frequenzbereiches,
und/oder
unter Verwendung der ersten Funkressourcen (UL, DL),
und/oder
unter Verwendung von Funkressourcen eines anderen Frequenzbereiches.

3. Verfahren nach Anspruch 1 oder 2, bei dem im Rahmen der Signalisierungs-Kommunikation (TRIGGER, ACK1, RES) die erste netzseitige Funkstation (BSWA) der zweiten netzseitigen Funkstation (BSLA) eine Anzeige-Nachricht (TRIGGER) sendet zur Anzeige eines Abstimmungsbedarfs der ersten netzseitigen Funkstation (BSWA).

4. Verfahren nach Anspruch 3, bei dem der Abstimmungsbedarf durch einen vermehrten Funkressourcenbedarf der ersten netzseitigen Funkstation (BSWA) verursacht wird.

5. Verfahren nach Anspruch 3 oder 4, bei dem für die Versendung der Anzeige-Nachricht periodisch wiederkehrend Funkressourcen des Frequenzbereiches vorgesehen sind.

6. Verfahren nach einem der Ansprüche 1 bis 5, bei dem im Rahmen der Signalisierungs-Kommunikation (TRIGGER, ACK1, RES) vor der Bestimmung der für die Abstimmung (SIGNAL) zu verwendenden ersten Funkressourcen (UL, DL) entschieden wird, Funkressourcen des Frequenzbereiches für die Abstimmung (SIGNAL) zu verwenden.

7. Verfahren nach einem der Ansprüche 1 bis 6, bei dem die erste netzseitige Funkstation (BSWA) über die für die Abstimmung (SIGNAL) zu verwendenden ersten Funkressourcen (UL, DL) entscheidet und im Rahmen der Signalisierungs-Kommunikation (TRIGGER, ACK1, RES) der zweiten netzseitigen Funkstation (BSLA) die ersten Funkressourcen (UL, DL) mitteilt.

8. Verfahren nach Anspruch 7, bei dem für die Mitteilung der ersten netzseitigen Funkstation (BSWA) periodisch wiederkehrend Funkressourcen des Frequenzbereiches vorgesehen sind.

9. Verfahren nach einem der Ansprüche 1 bis 8, bei dem die erste netzseitige Funkstation (BSWA) von einer netzseitigen Einrichtung eine Nachricht empfängt, welche der ersten netzseitigen Funkstation (BSWA) eine Entscheidungsbefugnis verleiht zur Entscheidung über für die Abstimmung (SIGNAL) zu verwendende Funkressourcen.

10. Verfahren nach einem der Ansprüche 1 bis 9, bei dem die erste netzseitige Funkstation (BSWA) der zweiten netzseitigen Funkstation (BSLA) und zumindest einer weiteren netzseitigen Funkstation gegenüber eine Entscheidungsbefugnis hat zur Entscheidung über für eine Abstimmung (SIGNAL) zu verwendende Funkressourcen.

11. Verfahren nach einem der Ansprüche 1 bis 10, bei dem die ersten Funkressourcen (UL, DL) vor der Abstimmung (SIGNAL) von der ersten netzseitigen Funkstation (BSWA) zur Kommunikation mit Teilnehmerstationen verwendet werden.

12. Verfahren nach einem der Ansprüche 1 bis 11, bei dem die ersten Funkressourcen (UL, DL) Bestandteil eines Zeitrahmens der ersten netzseitigen Funkstation (BSWA) und/oder der zweiten netzseitigen Funkstation (BSLA) sind.

13. Verfahren nach einem der Ansprüche 1 bis 12, bei dem nach der Signalisierungs-Kommunikation (TRIGGER, ACK1, RES) die ersten Funkressourcen (UL, DL) für die Abstimmung (SIGNAL) reserviert sind.

14. Verfahren nach Anspruch 13, bei dem nach erfolgter Abstimmung (SIGNAL) die ersten Funkressourcen (UL, DL) freigegeben werden.

15. Verfahren nach Anspruch 14, bei dem vor der Freigabe die erste netzseitige Funkstation (BSWA) eine Nachricht (REL) an die zweite netzseitige Funkstation (BSLA) sendet zur Anzeige der Freigabe.

16. Netzseitige Funkstation (BSWA) für ein Funkkommunikationssystem, in welchem zur Kommunikation zwischen netzseitigen Funkstationen (BSWA, BSLA) und Teilnehmerstationen ein Frequenzbereich verwendet wird, mit
Mitteln zum Durchführen einer direkten Abstimmung (SIGNAL) mit einer weiteren netzseitigen Funkstation (BSLA) über jeweils zur Kommunikation mit Teilnehmerstationen verwendete Funkressourcen, wobei die Abstimmung (SIGNAL) unter Verwendung von ersten Funkressourcen (UL, DL) des Frequenzbereiches erfolgt, und
Mitteln zum Teilnehmen vor der Abstimmung (SIGNAL) an einer Signalisierungs-Kommunikation (TRIGGER, ACK1, RES) mit der weiteren netzseitigen Funkstation (BSLA) zur Bestimmung der für die Abstimmung (SIGNAL) zu verwendenden ersten Funkressourcen (UL, DL).
